# EUROPÄISCHE PATENTANMELDUNG

(11) **EP 0 684 342 A2**
(43) Veröffentlichungstag der Anmeldung: **29.11.1995**
(21) Anmeldenummer: 95108180.1
(22) Anmeldetag: 29.05.1995
(51) Int. Cl.: E02B 7/28

(54) **Hochwasserschutzwand**

(30) Priorität: 28.05.1994 DE 4418689; 17.10.1994 DE 4437098
(71) Anmelder: Gega, Josef, D-45884 Gelsenkirchen (DE); Trainer, Karl-Hermann, D-57290 Neunkirchen (DE)
(72) Erfinder: Gega, Josef, D-45884 Gelsenkirchen (DE); Trainer, Karl-Hermann, D-57290 Neunkirchen (DE)
(74) Vertreter: Thiel, Christian, Dr. Dipl.-Chem.

(57) **Zusammenfassung**

Eine Hochwasserschutzwand aus einem oder mehreren Wandelementen (3) und Dichtelementen zwischen Boden und Wandelementen (3) sowie benachbarten Wandelementen, in welcher die Schutzwand im Boden versenkt mit aufrichtbaren Wandelementen (3) ausgebildet ist, wobei jedes Wandelement (3) über wenigstens ein sich mit dem Wandelement aufrichtendes Stützelement verfügt.

## Beschreibung

Die Erfindung betrifft ein Hochwasserschutzwand aus einem oder mehreren Wandelementen und Dichtelementen zwischen Boden und Wandelementen sowie benachbarten Wandelementen. Eine solche Hochwasserschutzwand besteht insbesondere aus einer Reihe nebeneinander angeordneter Wandelemente, die Einrichtungen und Orte in der Nähe eines Gewässers im Falle eines Hochwassers vor dessen Auswirkungen zu schützen vermag.

Die Erfindung betrifft ferner eine Schutzwand, mit der Sammelbecken der Ableitungskanäle für Flüssigkeiten, insbesondere Regenwasser, temporer eingerichtet und aufrecht erhalten werden und Flüssigkeiten in ihrer Fließrichtung beeinflußt werden können.

Eine solche Schutzwand besteht insbesondere aus einer Reihe nebeneinander angeordneter Wandelemente, die Einrichtungen und Orte in der Nähe eines Gewässers im Fall eines Hochwassers vor dessen Auswirkungen schützen können, Flüssigkeiten, insbesondere Wasser, aber auch aus Vorratslagern auslaufende andere Flüssigkeiten, auffangen, sammeln und zurückhalten können, Strände, Küsten und Häfen Schutz vor auflaufendem Hochwasser bieten können, als Schutz gegen Ölverschmutzungen in Gewässernähe eiengesetzt werden können, zur Bildung von Sammelbecken, beispielsweise von mobilen Kläranlagen herangezogen werden können und bei Bedarf oberirdisch als Regenrückhaltebecken eingesetzt werden können. Von Bedeutung ist, daß die erfindungsgemäße Schutzwand bedarfgerecht eingesetzt werden kann, d. h. dann eingesetzt wird, wenn dies erwünscht oder notwendig ist.

Seit Alters her ist der Hochwasserschutz in einer Reihe von hochwassergefährdeten Städten an größeren Flüssen und Seen nicht nur in Deutschland ein Gebot und Problem. Zum einen gilt es, die Bevölkerung und auch die öffentlichen Einrichtungen vor den Auswirkungen gelegentlich oder periodisch auftretender Hochwässer zu schützen. Zum anderen sind aber Hochwasserschutzmaßnahmen, die den Zugang zum Gewässer versperren oder erschweren, häufig aus politischen oder wirtschaftlichen Gründen nicht durchsetzbar. Insbesondere in innerstädtischen Bereichen einer Reihe von größeren Städten können deshalb keine festen Deiche oder Wände errichtet werden.

Aus diesem Grunde ist man beispielsweise in Köln dazu übergegangen, die Innenstadt bei drohendem Hochwasser mit mobilen Hochwasserschutzwänden zur Wasserfront hin abzusichern. Diese Maßnahme hatte sich in der Vergangenheit durchaus bewährt. Es hat sich aber gezeigt, daß diese mobilen Schutzwände den immer häufiger und höher auftretenden Hochwässern nicht mehr gerecht werden. Insbesondere ist ihre Höhe und Belastbarkeit nicht für die mit immer höheren Scheitelwellen auftretenden Hochwässer jüngeren Datums ausgelegt. Da die zunehmende Versiegelung der Landschaft und Begradigung der Flußläufe aber weiterhin die Gefahr von schweren Hochwässern erhöht, besteht Bedarf an stärker belastbaren und höher aufrichtbaren Hochwasserschutzwänden.

Hinzu kommt, daß im Rahmen der dichter werdenden Besiedlung auch der Flußufer und der Innenstadtbereiche die Höhe der hochwasserbedingten Schäden außerordentlich zunimmt. Die in früheren Zeiten weniger häufig und weniger stark auflaufenden Hochwässer konnten noch toleriert werden, solang der durch das Hochwasser angerichtete Schaden ein gewisses Verhältnis zu den Kosten von Schutzmaßnahmen nicht überstieg. Die inzwischen gestiegenen Scheitelpunkte von Hochwasserwellen und dichtere Besiedlung bedingen aber immer größere Schäden, die durch steigende Tendenz zu Hochwässern weiter verstärkt werden. Insoweit besteht nunmehr ein Bedarf an einem zuverlässigen Schutzsystem, mit dem derartige Schäden abgewandt werden.

Im Rahmen des Schutzes von Wohn- und Industrieanlagen ist es ferner wünschenswert, über ein Schutzwandsystem zu verfügen, mit dem im Bedarfsfalle schnell ein Auffangbecken oder ein Ableitungskanal für Flüssigkeiten errichtet werden kann. Mit einem solchen Auffangbecken können beispielsweise in der Umgebung von Brennstoff- oder Chemikalienlagern austretende Flüssigkeiten im Bedarfsfalle aufgefangen oder abgeleitet werden. Weitere Einsatzgebiete sind nicht ständig benötigte Sammelbecken für Niederschläge, Wasservorräte für verschiedene Zwecke oder dergleichen.

Aufgabe der Erfindung ist daher die Bereitstellung eines Hochwasserschutzsystems, mit dem zumindest die Kernbereiche hochwassergefährdeter Städte, aber auch sonst zu schützende private oder öffentliche Einrichtungen, zuverlässig geschützt werden können, das aber zugleich bei Normalwasser den Wasserzugang nicht behindert.

Ferner ist es Aufgabe der Erfindung die Bereitstellung eines Schutzwandsystems, mit dem im Bedarfsfall ein Auffang- oder Sammelbecken oder Ableitungskanal für Flüssigkeiten errichtet werden kann, das bei Nichtbenutzung im Landschaftsbild nicht in Erscheinung tritt und Verkehrswege nicht behindert.

Diese Aufgabe wird mit einer Hochwasserschutzwand der eingangs genannten Art gelöst, bei dem die Schutzwand im Boden versenkt/versenkbar mit aufrichtbaren Wandelementen ausgebildet ist, wobei jedes Wandelement über wenigstens ein sich mit dem Wandelement aufrichtendes Stützelement verfügt.

Die erfindungsgemäße Schutzwand befindet sich demnach vorzugsweise in einer am Einsatzort, etwa entlang der Wasserfront, verlaufenden Kanalgrube, in der die Wandelemente aufrecht oder liegend untergebracht sind und im Falle des Einsatzes, etwa bei einem drohenden Hochwasser, bis zu einer Höhe ausgefahren werden können, die dem Scheitelwert der Hochwasserwelle standhalten kann. Erfindungsgemäß sind so durchaus Höhen von 4 m oder mehr erreichbar.

Zur Anlage eines temporären Auffangbeckens oder Ablauffkanals befindet sich die erfindungsgemäße Schutzwand in einer Kanalgrube, die in beliebiger Geometrie in den Grund eingebracht ist. Bei ausgefahrenen Wandelementen wird ein durch die Wandelemente definiertes Becken oder ein Ablaufkanal zur temporären Aufnahme von Flüssigkeiten gebildet, wobei Flüssigkeitsstände von 4 m und mehr ohne weiteres erreicht werden können.

Die erfindungsgemäße Schutzwand besteht aus einem oder mehreren nebeneinander angeordneten Wandelementen. Diese Wandelemente sind gegeneinander abgedichtet und zudem mit einer Dichtung gegen den angrenzenden Boden versehen, beispielsweise in Form von Gummmielementen, etwa Gummilippen. Andere Formen von Dichtungen sind möglich.

Die Wandelemente des erfindungsgemäßen Hochwasserschutzwands können auf übliche Weise ausgefahren werden, beispielsweise mechanisch oder hydraulisch. Der Betrieb kann über Motoren erfolgen, jedoch ist es zweckmäßig, daß zumindest zusätzlich ein Handbetrieb möglich ist, da im Falle eines Hochwassers die Funktionsfähigkeit von elektrischen oder Explosionsmotoren nicht immer gewährleistet werden kann.

Mechanisch können die erfindungsgemäßen Wandelemente beispielsweise über Getriebe, Zahnstangen, Seilzüge oder dergleichen ausgefahren werden, hydraulisch beispielsweise über Hydraulikzylinder mit Pumpantrieb. In beiden Fällen ist es sinnvoll, einen Handbetrieb des Auffahrmechanismus vorzusehen.

Weiterhin bevorzugt sind Lösungen, bei denen die Wandelemente über Schwimmer in einem flutbaren Schwimmtank gelagert sind, der auch so ausgelegt sein kann, daß er bei Erreichen eines gewissen Hochwasserstandes von selbst flutet.

Dazu können die Wandelemente auf Schwimmer montiert werden, bzw. als Schwimmer ausgebildet sein. Um das Aufschwimmen zu kontrollieren bzw. ein unerwünschtes Aufschwimmen zu vermeiden, ist es sinnvoll, die Schwimmer flutbar auszulegen, so daß sie Ballastwasser aufnehmen können. Zum Aufschwimmen der Wandelemente kann die Kanalgrube gesteuert oder umgesteuert flutbar sein, so daß die Wandelemente direkt mit dem Einströmen der Flüssigkeit angehoben werden. Auf diese Art und Weise ist auch eine problemlose Kontrolle der Funktionsfähigkeit im Falle eines ansteigenden Hochwassers möglich. Bei Absinken des Flüssigkeitsstands der Wandelemente verschwinden diese wieder in der Kanalgrube. Insbesondere bei umgesteuerten Fluten der Kanalgrube ist die flutbare Auslegung der Schwimmkörper sinnvoll, um ein unnötiges Ausfahren der Schutzwände bei nicht bedrohlichen Wasserständen zu vermeiden.

Weitere bevorzugte Ausführungsformen sind Gegenstand der Unteransprüche.

Die Erfindung wird durch die beiliegenden Abbildungen näher erläutert. Von diesen zeigt
Fig. 1 schematisch in seitlicher Ansicht ein erfindungsgemäße Schutzwand mit mechanischem Antrieb;
Fig. 2 eine gemäß Fig. 1 zum Einsatz kommende ausfahrbare Schutzwand;
Fig. 3 eine zum Ausfahren der Schutzwand gemäß Fig. 2 geeignete mechanische Hebevorrichtung;
Fig. 4 eine weitere Ausführung einer erfindungsgemäßen Schutzwand mit hydraulischem Antrieb;
Fig. 5 eine weitere Auführungsform einer erfindungsgemäßen Schutzwand mit einem auf einem Schwimmer aufstehenden Wandelement;
Fig. 6 eine schematische seitliche Ansicht einer Schutzwand, die aus horizontaler Lage mittels eines Schwimmkörpers aufgerichtet wird; und
Fig. 7 eine weitere Ausführungsform einer Schutzwand, die aus horizontaler Lage mittels eines hydraulischen Antriebs aufgerichtet wird.

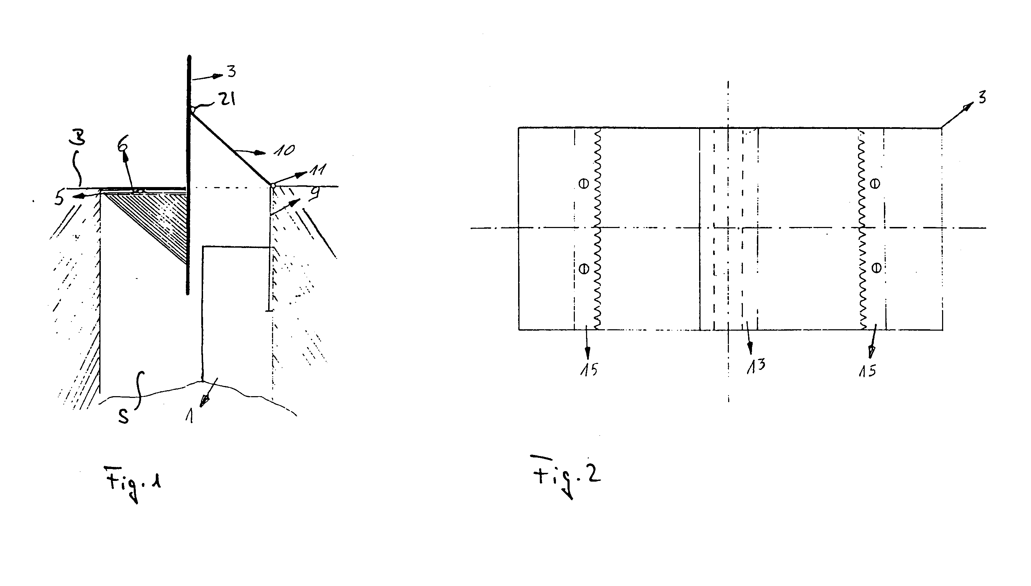

Fig. 1 zeigt in seitlicher Ansicht eine erfindungsgemäße Hochwasserschutzwand, die in einer Kanalgrube S angeordnet ist. Innerhalb der Kanalgrube befindet sich ein Fundament 1 zur Lagerung der mechanischen Hebevorrichtung (nicht gezeigt) sowie das Wandelement 3, hier in ausgefahrenem Zustand. Eine Abdeckplatte 10, die über Scharniere 11 an eine Halterung 9 schwenkbar gelagert ist, ist schräg gegen die wasserabgewandte Seite der Wand 3 gerichtet und dort an einem bewegbaren Halteelement 21 fixiert. Die Abdeckplatte 10 befindet sich in nicht aufgerichtetem Zustand auf Bodenniveau B und kann als Gehweg oder dergleichen ausgebildet sein.

An der Wandfläche 3 befindet sich innerhalb der Kanalgrube S ein Vorsprung 5 zur Aufnahme von einer oder mehreren Dichtleisten 6, die das Eindringen von Wasser in den Schacht S und hinter die Schutzwand verhindern sollen. Geringe Mengen eindringenden Wassers aufgrund von Undichtigkeiten können in jedem Fall aber durch Pumpen beherrscht werden.

Fig. 2 zeigt eine Wandfläche 3 in der Draufsicht mit Führungselementen 13, die das vertikale Ausfahren der Wand sicherstellen sollen sowie Zahnstangen 15, auf die die mechanische Hebevorrichtung einwirkt.

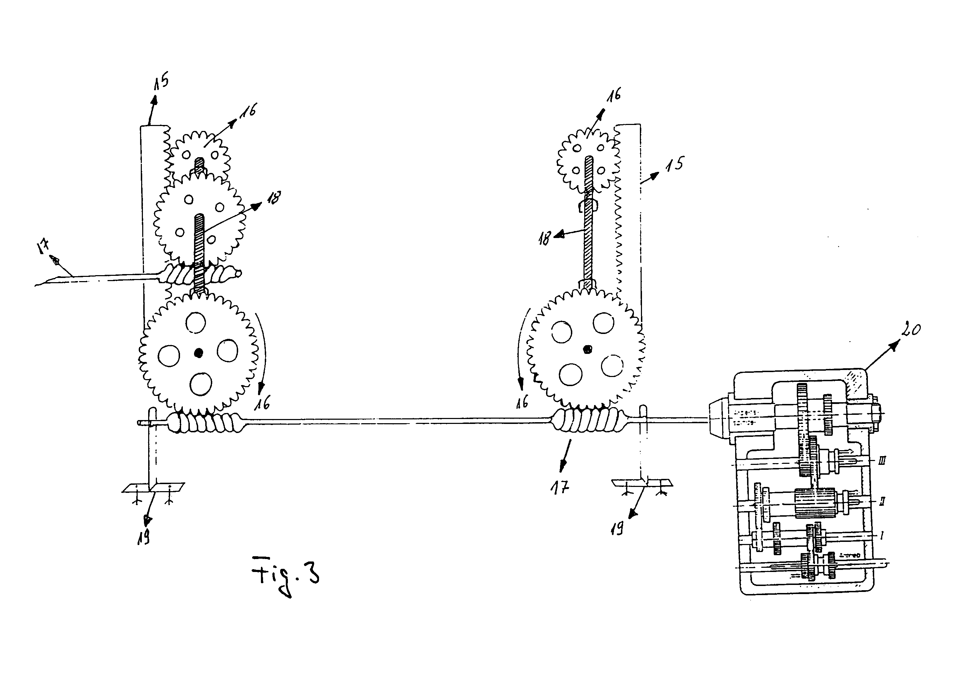

Eine geeignete mechanische Hebevorrichtung ist in Fig. 3 dargestellt. An Halterungen 19 gelagerte Schneckenwellen 17 wirken über Zahnräder 16 und Wellen 18 auf die Zahnstangen 15 der Wandelemente. Weitere Wandelemente können über zusätzliche Schneckenwellen 17 angeschlossen werden. Zum Antrieb dient ein Stufenrädergetriebe 20, das über Motoren oder per Hand betätigt werden kann.

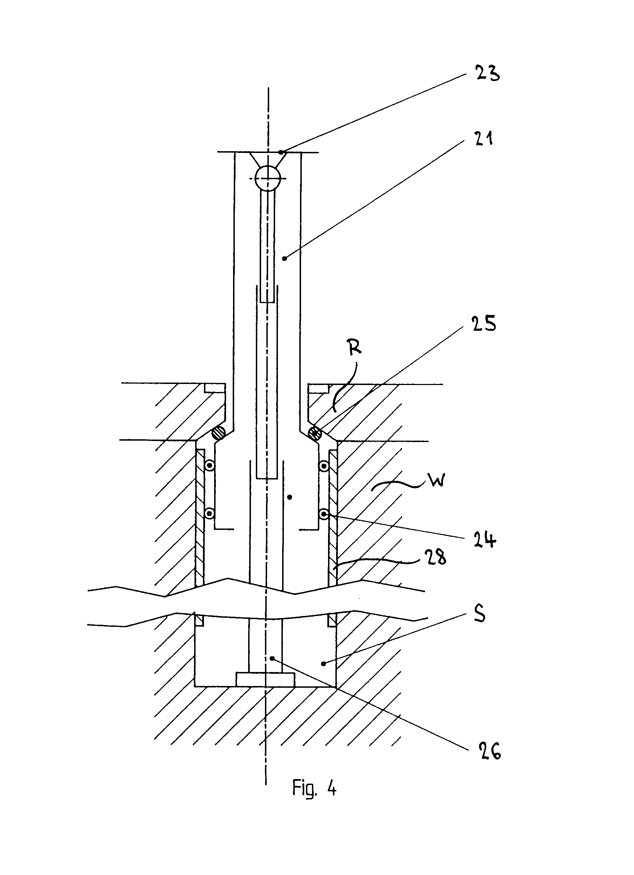

Eine hydraulische Hebevorrichtung ist in Fig. 4 dargestellt. Eine teleskopierbarer Hydraulikzylinder 26 steht in der Kanalgrube S auf und hebt die Schutzwand 21 aus der Kanalgrube. Die Kopfplatte 23 deckt die Kanalgrube bei nicht ausgefahrener Wand ab. Die Führungsrollen 24 stützen die Wand gegen den Wasserdruck über Schienen 28 auf die Kanalwand W ab. Dichtungen 25 an beiden Seiten des nach innen vorspringenden Kanalgrubenrandes R verhindern einen Flüssigkeitsdurchbruch, wobei der zu beiden Seiten vorspringende Fuß des Wandelements 21 über die Dichtungen 25 auf den Kanalgrubenrand R wirkt. Die Dichtungen 25 bestehen beispielsweise aus Gummileisten, die an der abgeschräkten Unterseite des nach innen vorspringenden Kanalgrubenrandes R fest installiert sind.

Zur Einbringung der Wandelemente in die Kanalgrube mit dem in Fig. 4 gezeigten Querschnitt ist es sinnvoll, den Kanalgrubenrand R, der die Grubenöffnung flaschenhalsähnlich einengt, nachträglich aufzubringen, in Form eines separaten Elements, das beispielsweise auf die Kanalgrubenwand W mittels üblicher Technik aufgesetzt und mit Ankern oder Bolzen gehalten wird. Dies ermöglicht die Einbringung der Wandelemente in die Kanalgrube und auch das spätere Auswechseln defekter Elemente.

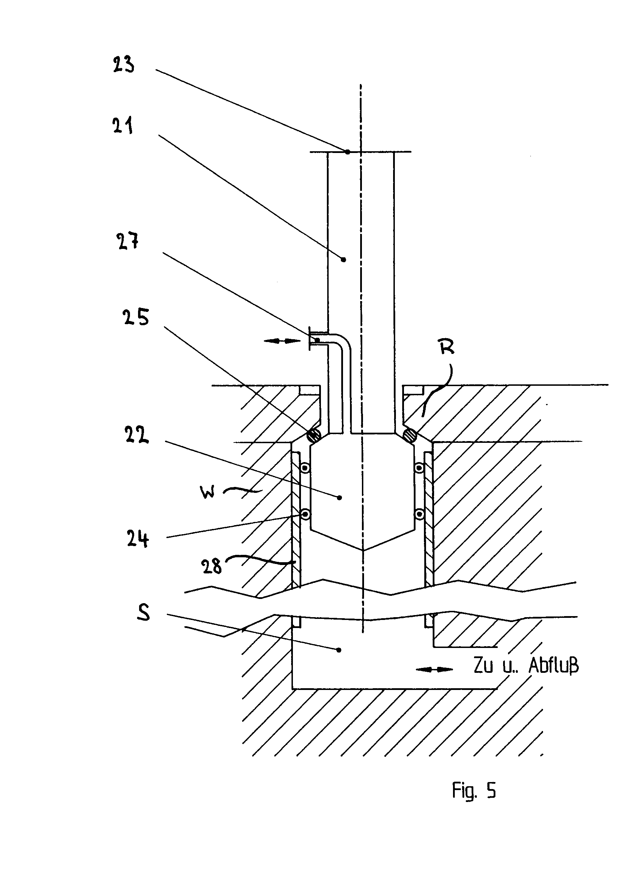

Die Ausführungsform gemäß Fig. 5 beruht auf dem Schwimmtankprinzip. Innerhalb des Kanalschachtes S ist ein Schwimmtank 22 angeordnet, auf dem die Wand 21 auf mindestens einem Schwimmtank 22 gehaltert ist. Die Kanalgrube S kann selbstflutend ausgelegt sein oder aber über gesteuerte Zu- und Abflüsse von außen mit Wasser (Flüssigkeit) versorgt werden.

Die Wand- bzw. Schwimmtankelemente 22 verfügen über Führungsrollen 24, die die Wandelemente 21 über Schienen 28 gegen die Kanalgrubenwand W stabilisieren.

Dichtungen 25, die an der Unterseite des auf die Wand W aufgesetzten Kanalgrubenrandes R angeordnet sind, verhindern das Austreten von Wasser an der Rückseite der Wand und des Kanals.

Die einzelnen Elemente sind über nicht gezeigte Befestigungen miteinander verbunden und abgedichtet.

Eine Abdeckplatte 23 auf der Krone der Schutzwand sorgt für eine Absicherung der Kanalgrube im Normalzustand und kann mit Rasen, Pflaster, Beton oder dergleichen der Oberfläche der Umgebung bzw. den Verkehrsflächen angepaßt werden, so daß das Schutzwandsystem praktisch unsichtbar wird.

Der Schwimmkörper 22 kann durch Befüllen und Lenzen über den Stutzen 27 zusätzlich mit Ballastwasser gefüllt und damit gesteuert werden.

Wie auch in Fig. 1 kann die Wand 21 auch von einer auf der Rückseite halb aufgerichteten Abdeckplatte 23, die in diesem Falle auf dem Kanalgrubenrand R einseitig gelagert ist, gestützt werden.

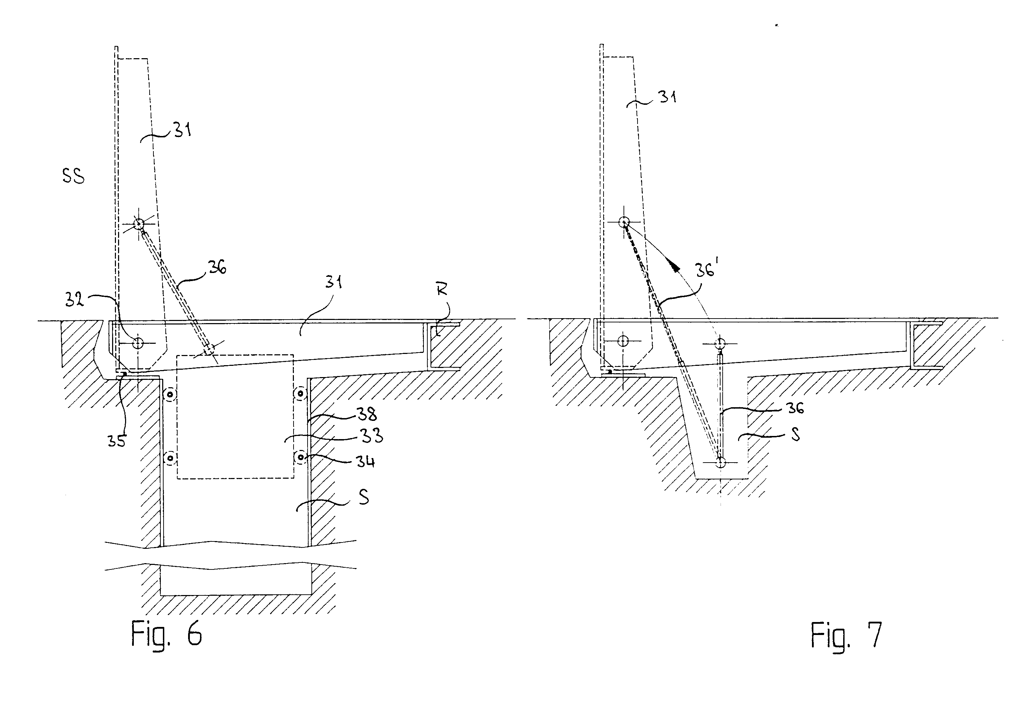

Die Schutzwand 31 gemäß Fig. 6 liegt horizontal im erweiterten oberen Teil einer Kanalgrube S, wobei sie einseitig bei 32 gelagert ist und auf der gegenüberliegenden Seite in Ruhestellung mit einem Vorsprung auf dem Kanalgrubenrand R aufliegt. Unter der Schutzwand 31 befindet sich im Schacht S ein Schwimmer 33, der über Rollen 34 an Führungsleisten oder -schienen 38 geführt ist und bei Flutung des Kanals die Schutzwand 31 über ein Gelenkarm 36 in die senkrechte Lage aufrichtet. Der auf die Schutzwand wirkende Druck lastet auf der Dichtung 35, die ein Überströmen des Hochwassers auf die zu schützende Seite SS verhindert. Die Dichtung zwischen den einzelnen Wandelementen ist hier nicht dargestellt, kann aber beispielsweise durch zwischen einzelnen Wandelementen angeordneten und an diesen festgelegten Gummilippen oder Gummibrücken gebildet werden.

Die Schutzwand gemäß Fig. 7 entspricht weitgehend der von Fig. 6, wobei aber die Aufrichtung in die Arbeitsposition mittels eines Hydraulikarms 36 erfolgt, der beidseitig an Gelenken gearbeitet ist und in der ausgefahrenen Position 36/die Wand 31 in der Senkrechten fixiert.

## Patentansprüche

1. Hochwasserschutzwand aus einem oder mehreren Wandelementen und Dichtelementen zwischen Boden und Wandelementen sowie benachbarten Wandelementen, dadurch gekennzeichnet, daß die Schutzwand im Boden versenkt mit aufrichtbaren Wandelementen ausgebildet ist, wobei jedes Wandelement über wenigstens ein sich mit dem Wandelement aufrichtendes Stützelement verfügt.

2. Schutzwand nach Anspruch 1, dadurch gekennzeichnet, daß die Wandelemente in einer Kanalgrube versenkt sind, die mit einer oder mehreren schwenkbar Abdeckplatten abgedeckt ist.

3. Schutzwand nach Anspruch 2, dadurch gekennzeichnet, daß die Abdeckplatten schwenkbar gelagert und als Stützelemente ausgebildet sind, die die ausgefahrenen Wandelementen einseitig abstützen.

4. Schutzwand nach Anspruch 3, dadurch gekennzeichnet, daß die Wandelemente über Halteelemente zur Festlegung der beweglichen Abdeckplatte verfügen.

5. Schutzwand nach einem der Ansprüche 2 bis 4, gekennzeichnet durch wenigstens ein in der Kanalgrube angeordnetes Getriebe, das auf wenigstens eine an jedem Wandelement angeordnete Zahnstange wirkt.

6. Schutzwand nach Anspruch 5, dadurch gekennzeichnet, daß das Getriebe mit der Hand betreibbar ist.

7. Schutzwand nach einem der Ansprüche 2 bis 4, dadurch gekennzeichnet, daß die Kanalgrube als flutbarer Schwimmtank ausgebildet ist, in dem das jeweilige Wandelement über daran angeordnete Schwimmelemente vertikal beweglich gelagert ist.

8. Schutzwand nach Anspruch 7, dadurch gekennzeichnet, daß die Schwimmtanks bei Erreichen eines vorgegebenen Hochwasserstandes selbstflutend ausgelegt sind.

9. Schutzwand nach Anspruch 7 und 8, dadurch gekennzeichnet, daß die Schwimmelemente flutbar ausgebildet sind.

10. Schutzwand nach Anspruch 2, dadurch gekennzeichnet, daß das Stützelement ein Hydraulikzylinder ist.

11. Schutzwand nach Anspruch 10, dadurch gekennzeichnet, daß das Stützelement im Innern des Wandelements angeordnet ist und das Wandelement aufrecht in der Kanalgrube versenkt ist.

12. Schutzwand nach einem der Ansprüche 7 bis 11, dadurch gekennzeichnet, daß die Wandelemente mit Rollen gegen die aufgehenden Wände der Kanalgrube gelagert sind.

13. Schutzwand nach Anspruch 12, dadurch gekennzeichnet, daß die Rollen an Schienen geführt sind.

14. Schutzwand nach Anspruch 2, dadurch gekennzeichnet, daß die Wandelemente liegend in der Kanalgrube angeordnet sind, wobei deren Oberseite die Abdeckplatte bildet.

15. Schutzwand nach Anspruch 14, dadurch gekennzeichnet, daß die Stützelemente in die Kanalgrube reichende Hydraulikarme sind, über die die Wandelemente aufgerichtet werden können.

16. Schutzwand nach Anspruch 14, dadurch gekennzeichnet, daß die Stützelemente Stützarme sind, die auf Schwimmkörpern montiert sind.

17. Schutzwand nach Anspruch 16, dadurch gekennzeichnet, daß der Schwimmkörper über Rollen gegen Schienen an den aufgehenden Wänden der Kanalgrube oder des Schachtes abgestützt ist.
